# FASCICULE DE BREVET EUROPEEN

(11) **EP 1 553 688 B1**
(45) Date de publication et mention de la délivrance du brevet: **04.10.2006**
(21) Numéro de dépôt: 04029011.6
(22) Date de dépôt: 08.12.2004
(51) Int. Cl.: H02M 7/217

(54) **Installation destinée a la manoeuvre d'une porte de batiment et procédé de commande de l'alimentation d'une telle installation**
Installation zum betrieben einer Tür eines Gebaüde und Verfahren zur Steuerung der elektrischen Versorgung einer solchen Installation.
Installation for operation of a door in a building and procedure for controlling the supply of such an installation

(30) Priorité: 19.12.2003 FR 0315058
(43) Date de publication de la demande: 13.07.2005
(73) Titulaire: Somfy SAS, 74300 Cluses (FR)
(72) Inventeur: Bruno, Serge, 74460 Marnaz (FR)
(74) Mandataire: Bugnion Genève

(56) Documents cités:
- EP-A- 1 283 590
- DE-A- 3 304 759
- DE-A- 4 028 348
- DE-C1- 10 241 778
- US-A- 6 061 259
- SPEHRO PEPHANY: "MOSFET switch provides efficient ac/dc conversion" DESIGN IDEAS, vol. 2119, 17 février 2000 (2000-02-17), page 149, XP000966357

## Description

L'invention se rapporte à un procédé d'alimentation défini par le préambule de la revendication 1. Il concerne également une installation pour la mise en oeuvre de ce procédé.

Un actionneur destiné à la manoeuvre d'un élément mobile de fermeture comprend généralement un moteur à courant continu, un réducteur et une liaison cinématique entre la sortie du réducteur et l'élément mobile de fermeture. La puissance électrique du moteur est de l'ordre de la centaine de watts.

Une partie importante de la puissance du moteur est consommée dans les pertes mécaniques au niveau du réducteur. Ce réducteur étant le plus souvent irréversible, il permet d'assurer le blocage de l'élément mobile dès que le moteur n'est plus alimenté.

Un ensemble motoréducteur destiné habituellement à entraîner des essuie-glace de voiture est couramment utilisé dans les actionneurs pour portes de garage et portails pour profiter des faibles coûts de fabrication dus aux importants volumes de fabrication. Ce motoréducteur présente un réducteur à vis sans fin. Il est également possible d'utiliser un motoréducteur réversible de meilleur rendement associé à un dispositif complémentaire assurant le blocage de l'élément mobile de fermeture lorsque le moteur n'est pas alimenté.

Un problème posé par l'alimentation des moteurs à courant continu utilisés pour ces applications concerne le bon verrouillage de la porte.

En effet, un avantage important lié à l'utilisation d'une motorisation de porte est généralement son caractère irréversible, provenant du réducteur ou encore de la présence d'un élément complémentaire de blocage du rotor du moteur. Dès que le moteur n'est plus alimenté, il est impossible pour un malfrat d'ouvrir la porte sinon par effraction équivalente à la destruction d'une serrure.

Afin d'assurer le bon verrouillage de la porte, il faut que le moteur puisse exercer un couple important, dans la phase de verrouillage où sa vitesse diminue, pendant que les pièces élastiques sont mises sous tension mécanique.

Un autre problème concerne la présence éventuelle de points durs sur la trajectoire de la porte. Un point dur peut par exemple être dû à un défaut de la structure mécanique de la porte, tel qu'une déformation locale dans une glissière ou un rail de guidage. Une fois « appris » (afin d'être différencié d'un obstacle), le point dur ne doit pas entraîner de ralentissement du moteur, qui donnerait au mouvement de la porte un aspect saccadé faisant douter de la qualité du moyen d'entraînement.

Les moteurs à courant continu sont connus pour présenter une caractéristique couple/vitesse satisfaisante pour supporter des variations importantes de couple, mais ceci n'est possible sans chute significative de la vitesse qu'à condition que le convertisseur d'alimentation le permette, en maintenant une tension d'alimentation au moins sensiblement constante lorsque le courant absorbé par le moteur augmente.

Par exemple, il convient que l'alimentation puisse fournir, pendant quelques secondes, lors du verrouillage de la porte, un courant deux fois plus important que le courant nominal d'alimentation du moteur et, pendant des temps très courts de quelques dizaines de millisecondes, lors du franchissement de points durs, un courant quatre à six fois plus important que le courant nominal.

La contrainte d'alimentation du moteur pendant la phase de verrouillage de la porte ou pour absorber les points durs, conduit à surdimensionner en conséquence le bloc d'alimentation et notamment le transformateur quand il s'agit d'une alimentation conventionnelle ou conduit à court-circuiter ou désactiver la sécurité lorsqu'il s'agit d'une alimentation à découpage par exemple de type « fly-back », ce qui peut être dangereux.

On connaît du document « MOSFET switch provides efficient ac/dc conversion » publié dans la revue « Design Ideas » (vol. 2119 du 17 février 2000) un dispositif alimenté par une tension alternative, comprenant un convertisseur de tension alternatif/continu et un moteur à courant continu. Le convertisseur comprend un redresseur, un condensateur branché entre les bornes d'entrée du moteur, ce condensateur étant chargé par la tension alternative redressée à travers un interrupteur commandé par un circuit de commande à la fréquence de la tension alternative redressée.

On connaît du brevet US 6,061,259, un dispositif d'alimentation d'une charge à partir d'une tension alternative, comprenant une varistance, un redresseur, un interrupteur électronique et un condensateur branché aux bornes de la charge. Les temps de conduction de l'interrupteur électronique sont calculés à partir des valeurs de la tension de sortie, de la tension d'entrée instantanée et de la tension d'entrée moyenne. Le dispositif est ainsi protégé contre de fortes perturbations de la tension d'entrée. Il n'est pas apte à supporter des courants de pointe important sur sa sortie, le courant étant prévu pour varier dans une plage de 0 à 50 milliampères.

On connaît de la demande EP 1 283 590, un dispositif d'alimentation d'une charge à partir d'une tension alternative, comprenant un redresseur, un condensateur branché entre les bornes d'entrée de la charge, ce condensateur étant chargé par la tension alternative redressée à travers un interrupteur commandé par un circuit de commande à la fréquence de la tension alternative redressée. Le passage à l'état fermé de l'interrupteur est commandé par le passage de la tension alternative redressée sous une tension de référence et le passage à l'état ouvert de l'interrupteur est commandé par la tension aux bornes de la charge.

On connaît de la demande DE 33 04 759 un dispositif convertisseur alternatif - continu comprenant un interrupteur commandé par une unité électronique en fonction de différentes tensions prélevées au niveau d'un redresseur. La tension de référence provoquant l'ouverture de l'interrupteur est supérieure à celle provoquant sa fermeture.

Ces dispositifs connus de l'art antérieur ne présentent pas de moyens de sécurité permettant de gérer des surcharges plus ou moins temporaires se traduisant par un courant de sortie important, en assurant la non détérioration des composants électroniques qui les composent.

Le but de l'invention est de fournir un procédé d'alimentation d'une installation et une installation permettant de pallier aux inconvénients précités et apportant une amélioration par rapport aux procédés et installations connus de l'état de la technique. En particulier, l'invention permet d'éviter de surdimensionner les moyens d'alimentation.

Le procédé d'alimentation selon l'invention est caractérisé par la partie caractérisante de la revendication 1.

Différentes variantes d'exécution du procédé sont définies par les revendications dépendantes 2 à 15.

L'installation selon l'invention est définie par la revendication 16.

Le dessin annexé représente une installation selon l'invention et un procédé de commande de son alimentation.

La figure 1 est un schéma de l'installation selon l'invention.

La figure 2 est un ordinogramme d'un procédé de commande de l'alimentation électrique de l'installation selon l'invention.

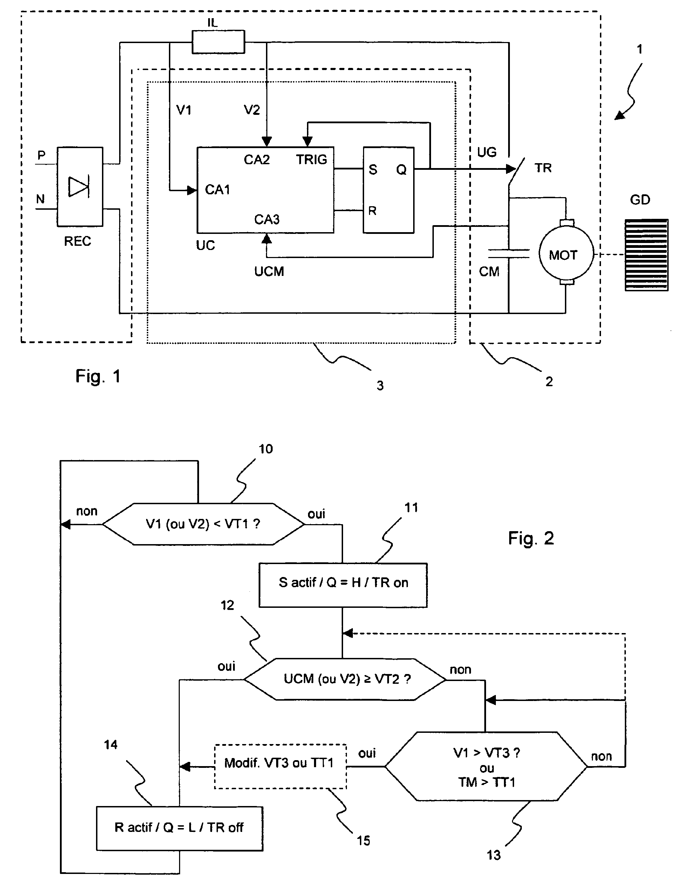

L'installation 1 représentée à la figure 1 est destinée à la manoeuvre d'une porte GD d'un bâtiment ou d'un portail. L'installation comprend principalement un circuit de puissance 2 et un circuit de commande 3.

Dans le circuit de puissance, la tension alternative du secteur représenté par la ligne de phase P et la ligne de neutre N est redressée par des moyens REC de redressement double alternance. La tension de sortie des moyens de redressement permet la charge unidirectionnelle d'un condensateur CM à travers un interrupteur commandé TR et des moyens IL de limitation du courant de charge du condensateur CM.

L'interrupteur commandé TR est par exemple un transistor de type MOS, dont la tension maximum de fonctionnement est au moins égale à celle du secteur.

Préférentiellement, les moyens IL permettent de limiter l'intensité au moment de la fermeture de l'interrupteur commandé TR. Ces moyens peuvent comprendre une simple résistance ou circuit plus complexe comme le primaire d'un transformateur de rapport unitaire dont le courant secondaire s'ajoute, après redressement, au courant de charge du condensateur CM.

Un moteur à courant continu MOT est branché aux bornes du condensateur CM pendant les phases où il doit fonctionner. Il entraîne le portail ou la porte GD via un réducteur et une liaison mécanique qui ne sont pas représentés.

De même, dans le but d'améliorer la clarté des figures, on n'a pas représenté, le circuit de contacteurs permettant l'alimentation dans l'un ou l'autre sens du moteur MOT par la tension UCM aux bornes du condensateur CM.

L'interrupteur commandé TR est commandé par le circuit de commande 3. Ce circuit peut baser sa loi de commande à partir de la tension secteur redressée V1 prélevée juste en aval des moyens de redressement REC et/ou de la tension de sortie UCM. La loi peut également dépendre de la tension V2 prélevée entre les moyens IL de limitation du courant et l'interrupteur commandé.

On représente symboliquement par une bascule RS le circuit ordonnant le blocage ou la mise en conduction de l'interrupteur commandé TR. La sortie Q de cette bascule commande par exemple la tension de grille UG d'un transistor.

Un état haut appliqué à l'entrée Reset R provoque un état bas au niveau de la sortie Q de la bascule ce qui bloque le transistor TR. Un état haut appliqué à l'entrée S provoque un état haut au niveau de la sortie Q de la bascule, ce qui rend le transistor TR conducteur.

Une unité de commande UC dont les sorties sont les entrées Set et Reset de la bascule RS a été représentée symboliquement. Cette unité de contrôle reçoit au moins deux signaux parmi les quatre signaux représentés : V1, V2, UCM, Q.

L'unité de commande UC comprend au moins un comparateur de tension au niveau des entrées CA1, CA2, CA3 (une ou plusieurs références de tension étant utilisées pour comparer les signaux au niveau de ces entrées). Elle peut également comprendre un circuit de mesure du temps activé par le signal Q attaquant une entrée TRIG.

Par rapport aux autres types connus d'alimentation, l'usage d'un tel convertisseur permet de fournir des courants importants sous une tension maximum pratiquement constante, la limite n'étant fixée que par les caractéristiques de l'interrupteur commandé et la capacité du condensateur. Or, il est connu qu'un transistor utilisable comme interrupteur commandé peut supporter des courants de pointe répétitifs ou occasionnels plus importants ou nettement plus importants que le courant moyen.

Un procédé d'alimentation électrique de l'installation est décrit en référence à la figure 2.

La fermeture de l'interrupteur commandé TR, représentée par l'étape 11, est préférentiellement provoquée lorsque la tension du secteur redressée devient inférieure à un seuil de tension VT1, ce franchissement de seuil étant détecté lors d'une étape de test 10.

De même, une fois l'interrupteur commandé devenu conducteur, une étape de test 12 est réalisée pour comparer la tension de sortie UCM (ou V2 puisque l'interrupteur commandé TR est conducteur) à une valeur seuil VT2. L'ouverture de l'interrupteur commandé TR est provoquée, lors d'une étape 14, dès que la tension de sortie atteint ce seuil VT2.

Une étape de test supplémentaire 13 est réalisée dans le cas où la tension de sortie n'a pas encore atteint la tension seuil VT2. Ce test peut concerner soit la tension d'entrée V1, soit le temps de conduction de l'interrupteur commandé.

Si le résultat du test est négatif, le procédé boucle sur l'étape 13 ou sur l'étape 12 (comme représenté par la flèche dessinée en traits pointillés sur la figure 2).

Si le test concerne la tension d'entrée V1, il compare celle-ci à une valeur de seuil VT3 supérieure à VT1. La valeur seuil VT3 étant supérieure à la valeur seuil VT1, une fois le transistor TR devenu conducteur, on tolère que le courant traversant l'interrupteur commandé dépasse sa valeur normale, correspondant au moment où l'interrupteur commandé TR passe de l'état ouvert à l'état fermé.

Si le test concerne la durée de conduction TM de l'interrupteur commandé TR, il compare celle-ci à une valeur de seuil de durée TT1 supérieure à la durée normale de conduction TT lorsque le moteur MOT absorbe le courant nominal. La valeur seuil de durée TT1 étant supérieure à la valeur seuil de durée TT, on tolère que le courant dépasse le courant nominal. La durée de conduction TM est mesurée par mesure de la durée d'activation de l'entrée TRIG de l'unité de contrôle UC.

Quand le test est réalisé sur la tension d'entrée et qu'elle atteint le seuil VT3, il est clair que la durée de conduction dépasse également la durée normale de conduction TT correspondant au débit du courant nominal vers le moteur.

Les seuils de tension VT3 ou de durée de conduction TT1 sont de préférence ajustables de manière dynamique. Cette modification dynamique du seuil est représentée par l'étape 15 et est effectuée par l'unité de commande.

Lors de l'initialisation, le seuil de tension VT3 ou le seuil de durée TT1 a une valeur élevée, autorisant par exemple une surintensité égale à 5 fois le courant nominal. Après que l'ouverture de l'interrupteur commandé TR a été commandé par le franchissement à la hausse du seuil de tension VT3 par la tension d'entrée V1 ou par le franchissement du seuil de durée TT1 par la durée de conduction TM de l'interrupteur commandé, le seuil de tension VT3 ou le seuil de durée TT1 peut être ramené, dans une étape facultative 15, à une valeur inférieure autorisant par exemple une surintensité égale à 2 fois le courant nominal. Cette modification peut intervenir après une temporisation facultative de quelques millisecondes, par exemple 20 ms.

Le seuil de tension VT3 ou le seuil de durée TT1 peut être ramené à la valeur initiale élevée autorisant une surintensité égale à 5 fois le courant nominal si pendant une période déterminée (par exemple 3 s), durant laquelle le seuil de tension VT3 ou le seuil de durée TT1 autorise une surintensité égale à 2 fois le courant nominal, l'ouverture de l'interrupteur commandé TR n'a pas été commandé par le franchissement du seuil de tension VT3 ou du seuil de durée TT1.

Cette réduction du seuil de tension VT3 ou du seuil de durée TT1 permet d'éviter des surchauffes et des destructions des composants, en particulier du transistor assurant la fonction d'interrupteur commandé.

La succession d'étapes décrites permet de résoudre les problèmes évoqués plus haut de surcharges très brèves ou de plus grande durée.

On peut imaginer différentes procédures de modification du seuil de tension VT3 ou du seuil de durée TT1 pour résoudre les problèmes de surchauffes. On peut en particulier prévoir que les seuils puissent prendre plus de deux valeurs de tension ou plus de deux valeurs de durée. La combinaison de la valeur de ces seuils et de leur durée de validité dépend en particulier des caractéristiques thermiques des composants. On peut aussi prévoir que le seuil de tension VT3 ou le seuil de durée TT1 permettent d'abord une surintensité très importante et deviennent ensuite inférieurs au seuil de tension VT1 ou au seuil de durée autorisant le courant nominal.

Tout ou partie de l'unité de commande et de l'équivalent de la bascule RS, peut être intégré dans un microcontrôleur, comportant des comparateurs et un compteur de temps (timer). Ce microcontrôleur peut par ailleurs être chargé de gérer des commandes ordonnées par un utilisateur.

Plutôt que d'utiliser la tension V1, on pourra avantageusement utiliser le couple de tensions V2 et UG comme paramètres de commande de l'état de l'interrupteur, la tension V2 représentant à la fois la tension d'alimentation (lorsque l'interrupteur est ouvert) et la tension de sortie (lorsque l'interrupteur est fermé). Dans ce cas, seules les entrées CA2 et TRIG de l'unité de commande sont utilisées.

L'installation et son procédé d'alimentation en énergie électrique, permettent également d'annuler la consommation énergétique du circuit de puissance lorsque le moteur n'est pas utilisé. Cet avantage est d'autant plus important que les normes et le respect de l'environnement obligent à limiter de manière drastique la consommation de veille des équipements.

## Revendications

1. Procédé de commande de l'alimentation d'une installation (1) destinée à la manoeuvre d'une porte (GD) de bâtiment ou d'un portail et alimentée par une tension alternative, comprenant un convertisseur de tension alternatif/continu et un moteur à courant continu (MOT) lié mécaniquement à la porte ou au portail, le convertisseur comprenant un redresseur (REC), un condensateur branché (CM) entre les bornes d'entrée du moteur, ce condensateur étant chargé par la tension alternative redressée (V1) à travers un interrupteur commandé (TR) par un circuit de commande (3) à la fréquence de la tension alternative redressée, **caractérisé en ce que** l'ouverture de l'interrupteur est commandée par le premier survenant des deux événements suivants, chacune commandant l'ouverture de l'interrupteur :
- le franchissement à la hausse d'un premier seuil de tension (VT2) par la tension (UCM) aux bornes du condensateur (CM),
- le franchissement d'un autre seuil (VT3 ; TT1) par une autre grandeur physique (V1 ; TM), cet autre seuil limitant le courant dans l'interrupteur de manière à le protéger contre des courants de pointe risquant d'entraîner sa détérioration, en autorisant néanmoins un courant supérieur au courant normal.

2. Procédé de commande de l'alimentation d'une installation selon la revendication 1, **caractérisé en ce que** la fermeture de l'interrupteur (TR) est commandée par le franchissement à la baisse d'un deuxième seuil de tension (VT1) par la tension alternative redressée (V1).

3. Procédé de commande selon la revendication 1 ou 2, **caractérisé en ce que** le franchissement d'un autre seuil (VT3 ; TT1) par une autre grandeur physique (UCM ; TM) est le franchissement à la hausse d'un troisième seuil de tension (VT3) par la tension alternative redressée (V1).

4. Procédé de commande selon la revendication 3, **caractérisé en ce que**, le troisième seuil de tension (VT3) est dans un premier temps supérieur au deuxième seuil de tension (VT1).

5. Procédé de commande selon la revendication 3 ou 4, **caractérisé en ce que** le troisième seuil de tension (VT3) est modifié par une unité de commande (UC) lors du fonctionnement de l'installation.

6. Procédé de commande selon la revendication 5, **caractérisé en ce que** le troisième seuil de tension (VT3) est modifié par l'unité de commande (UC) après que l'ouverture de l'interrupteur commandé (TR) a été commandée par le franchissement à la hausse du troisième seuil de tension (VT3) par la tension alternative redressée (V1).

7. Procédé de commande selon la revendication 1 ou 2, **caractérisé en ce que** le franchissement d'un autre seuil (VT3 ; TT1) par une autre grandeur physique (UCM ; TM) est le franchissement d'un seuil de durée (TT1) par la durée de conduction (TM) de l'interrupteur commandé (TR).

8. Procédé de commande selon la revendication 7, **caractérisé en ce que** le seuil de durée (TT1) est dans un premier temps supérieur à la durée de conduction (TM) de l'interrupteur commandé lorsque le moteur absorbe son courant nominal.

9. Procédé de commande selon la revendication 7 ou 8, **caractérisé en ce que** le seuil de durée (TT1) est modifié par une unité de commande (UC) lors du fonctionnement de l'installation.

10. Procédé de commande selon la revendication 9, **caractérisé en ce que** le seuil de durée (TT1) est modifié par l'unité de commande (UC) après que l'ouverture de l'interrupteur commandé (TR) a été commandée par le franchissement du seuil de durée (TT1) par la durée de conduction (TM) de l'interrupteur commandé (TR).

11. Procédé de commande selon la revendication 6 ou 10, **caractérisé en ce qu'**une temporisation est mise en oeuvre entre l'ouverture de l'interrupteur due au franchissement de seuil et la modification de ce seuil.

12. Procédé de commande selon la revendication 11, **caractérisé en ce que** la durée de temporisation vaut 20 ms.

13. Procédé de commande selon l'une des revendications 6, 10, 11 ou 12, **caractérisé en ce que** le troisième seuil de tension (VT3) ou le seuil de durée (TT1) est ramené à sa valeur initiale après une temporisation.

14. Procédé de commande selon la revendication 13, **caractérisé en ce que** le retour du troisième seuil de tension (VT3) ou du seuil de durée (TT1) à sa valeur initiale est conditionné par le fait que, pendant cette période, l'ouverture de l'interrupteur commandé (TR) n'a pas été commandée par un franchissement du troisième seuil de tension (VT3) par la tension alternative redressée (V1) ou par un franchissement du seuil de durée (TT1) par la durée de conduction (TM) de l'interrupteur commandé (TR).

15. Procédé de commande selon la revendication 13 ou 14, **caractérisé en ce que** la durée de temporisation vaut 3 s.

16. Installation destinée à la manoeuvre d'une porte (GD) de bâtiment ou d'un portail et alimentée par une tension alternative, comprenant un convertisseur de tension alternatif/continu et un moteur à courant continu (MOT) lié mécaniquement à la porte ou au portail, le convertisseur comprenant un redresseur (REC), un condensateur branché (CM) entre les bornes d'entrée du moteur, ce condensateur étant chargé par la tension alternative redressée (V1) à travers un interrupteur commandé (TR) par un circuit de commande (3) à la fréquence de la tension alternative redressée, **caractérisée en ce que** le circuit de commande (3) est muni d'une unité de commande (UC) permettant la mise en oeuvre du procédé de commande selon l'une des revendications 1 à 15.

## Claims

1. A method for controlling the power supply to an installation (1) designed for the operation of a door (GD) of a building or of a gate and powered by an AC voltage, comprising an AC/DC voltage converter and a DC motor (MOT) mechanically linked to the door or to the gate, the converter comprising a rectifier (REC), a capacitor (CM) connected across the input terminals of the motor, this capacitor being charged by the rectified AC voltage (V1) through a switch controlled (TR) by a control circuit (3) at the frequency of the rectified AC voltage, wherein the opening of the switch is triggered by the first occurring event of the two following events, each triggering the opening of the switch:
- the voltage (UCM) across the terminals of the capacitor (CM) rising through a first voltage threshold (VT2),
- another physical quantity (V1; TM) exceeding another threshold (VT3; TT1), where this other threshold limits the current in the switch so as to protect it from current surges that could be damaging to it, while nevertheless authorizing a higher current than the normal current.

2. The method for controlling the power supply to an installation as claimed in claim 1, wherein the closure of the switch (TR) is triggered by the rectified AC voltage (V1) falling below a second voltage threshold (VT1).

3. The control method as claimed in either of claims 1 and 2, wherein the crossing of another threshold (VT3; TT1) by another physical quantity (UCM; TM) is the rectified AC voltage (V1) rising through a third voltage threshold (VT3).

4. The control method as claimed in claim 3, wherein the third voltage threshold (VT3) is initially higher than the second voltage threshold (VT1).

5. The control method as claimed in either of claims 3 and 4, wherein the third voltage threshold (VT3) is modified by a control unit (UC) during the operation of the installation.

6. The control method as claimed in claim 5, wherein the third voltage threshold (VT3) is modified by the control unit (UC) after the opening of the controlled switch (TR) has been triggered by the rectified AC voltage (V1) rising through the third voltage threshold (VT3).

7. The control method as claimed in either of claims 1 and 2, wherein the crossing of another threshold (VT3; TT1) by another physical quantity (UCM; TM) is the conduction time (TM) of the controlled switch (TR) exceeding a duration time threshold (TT1).

8. The control method as claimed in claim 7, wherein the duration time threshold (TT1) is initially greater than the conduction time (TM) of the controlled switch when the motor draws its nominal current.

9. The control method as claimed in either of claims 7 and 8, wherein the duration time threshold (TT1) is modified by a control unit (UC) during the operation of the installation.

10. The control method as claimed in claim 9, wherein the duration time threshold (TT1) is modified by the control unit (UC) after the opening of the controlled switch (TR) has been triggered by the conduction time (TM) of the controlled switch (TR) exceeding the duration time threshold (TT1).

11. The control method as claimed in either of claims 6 and 10, wherein a time delay is implemented between the opening of the switch triggered by the crossing of a threshold and the modification of this threshold.

12. The control method as claimed in claim 11, wherein the delay time is 20 ms.

13. The control method as claimed in one of claims 6, 10, 11 or 12, wherein the third voltage threshold (VT3) or the duration time threshold (TT1) is returned to its initial value after a time delay.

14. The control method as claimed in claim 13, wherein the return of the third voltage threshold (VT3) or the duration time threshold (TT1) to its initial value is conditioned by the fact that, during this period, the opening of the controlled switch (TR) has not been triggered by the rectified AC voltage (V1) exceeding the third voltage threshold (VT3) or the conduction time (TM) of the controlled switch (TR) exceeding the duration time threshold (TT1).

15. The control method as claimed in either of claims 13 and 14, wherein the delay time is 3 s.

16. An installation designed for the operation of a door (GD) of a building or of a gate and powered by an AC voltage, comprising an AC/DC voltage converter and a DC motor (MOT) mechanically linked to the door or to the gate, the converter comprising a rectifier (REC), a capacitor (CM) connected across the input terminals of the motor, this capacitor being charged by the rectified AC voltage (V1) through a switch (TR) controlled by a control circuit (3) at the frequency of the rectified AC voltage, wherein the control circuit (3) is equipped with a control unit (UC) allowing the implementation of the control method as claimed in one of claims 1 to 15.

## Patentansprüche

1. Verfahren zum Steuern der elektrischen Versorgung einer Installation (1), die zum Betätigen einer Tür (GD) eines Gebäudes oder eines Tors bestimmt ist und mit Wechselspannung gespeist wird, mit einem Wechselspannungs-Gleichspannungs-Umformer und mit einem Gleichstrom-Motor (MOT), der mechanisch mit der Tür oder dem Tor verbunden ist, wobei der Umformer einen Gleichrichter (REC) und einen zwischen die Eingangsklemmen des Motors geschalteten Kondensator (CM) aufweist, welcher durch die gleichgerichtete Wechselspannung (V1) über einen Schalter (TR) geladen wird, der von einer Steuerschaltung (3) mit der Frequenz der gleichgerichteten Wechselspannung gesteuert wird, **dadurch gekennzeichnet, dass** das Öffnen der Schalters durch das zuerst auftretende Ereignis der beiden folgenden Ereignisse gesteuert wird, von denen jedes das Öffnen des Schalters bewirkt:
- Wenn die Spannung (UCM) an den Klemmen des Kondensators (CM) eine erste Spannungsschwelle (VT2) überschreitet;
- wenn eine andere physikalische Grösse (V1; TM) eine andere Schwelle (VT3; TT1) überschreitet, welche den Strom im Schalter begrenzt, um ihn vor Spitzenströmen zu schützen, die zu seiner Zerstörung führen könnten, dabei jedoch einen Strom zulässt, der stärker als der normale Strom ist.

2. Verfahren nach Anspruch 1, **dadurch gekennzeichnet, dass** der Schalter (TR) geschlossen wird, wenn die gleichgerichtete Wechselspannung (V1) eine zweite Spannungsschwelle (VT1) unterschreitet.

3. Verfahren nach Anspruch 1 oder 2, **dadurch gekennzeichnet, dass** es sich beim Überschreiten einer anderen Schwelle (VT3; TT1) durch eine andere physikalischen Grösse (UCM; TM) um das Überschreiten einer dritten Spannungsschwelle (VT3) durch die gleichgerichtete Wechselspannung (V1) handelt.

4. Verfahren nach Anspruch 3, **dadurch gekennzeichnet, dass** die dritte Spannungsschwelle (VT3) während einer ersten Zeit grösser als die zweite Spannungsschwelle (VT1) ist.

5. Verfahren nach Anspruch 3 oder 4, **dadurch gekennzeichnet, dass** die dritte Spannungsschwelle (VT3) beim Betrieb der Installation durch eine Steuereinheit (UC) modifiziert wird.

6. Verfahren nach Anspruch 5, **dadurch gekennzeichnet, dass** die dritte Spannungsschwelle (VT3) durch die Steuereinheit (UC) geändert wird, nachdem die Öffnung des gesteuerten Schalters (TR) durch das Überschreiten dieser dritten Spannungsschwelle (VT3) durch die gleichgerichtete Wechselspannung (V1) ausgelöst worden ist.

7. Verfahren nach Anspruch 1 oder 2, **dadurch gekennzeichnet, dass** es sich beim Überschreiten einer anderen Schwelle (VT3; TT1) durch eine andere physikalische Gösse (UCM; TM) um das Überschreiten einer Zeitdauerschwelle (TT1) durch die Zeitdauer (TM) handelt, während der sich der gesteuerte Schalter (TR) im leitenden Zustand befindet.

8. Verfahren nach Anspruch 7, **dadurch gekennzeichnet, dass** die Zeitdauerschwelle (TT1) während einer ersten Zeit grösser ist als die Zeitdauer (TM) der Leitung des Schalters, wenn der Motor seinen Nennstrom aufnimmt.

9. Verfahren nach Anspruch 7 oder 8, **dadurch gekennzeichnet, dass** die Zeitdauerschwelle (TT1) durch eine Steuereinheit (UC) beim Betrieb der Installation geändert wird.

10. Verfahren nach Anspruch 9, **dadurch gekennzeichnet, dass** die Zeitdauerschwelle (TT1) durch die Steuereinheit (UC) geändert wird, nachdem das Öffnen des gesteuerten Schalters (TR) durch das Überschreiten dieser Zeitdauerschwelle (TT1) durch die Dauer (TM) der Leitung des gesteuerten Schalters (TR) ausgelöst wurde.

11. Verfahren nach Anspruch 6 oder 10, **dadurch gekennzeichnet, dass** zwischen dem Öffnen des Schalters infolge des Überschreitens der Schwelle und der Änderung dieser Schwelle eine Verzögerung eingeführt wird.

12. Verfahren nach Anspruch 11, **dadurch gekennzeichnet, dass** die Dauer dieser Verzögerung 20 ms beträgt.

13. Verfahren nach einem der Ansprüche 6, 10, 11 oder 12, **dadurch gekennzeichnet, dass** die dritte Spannungsschwelle (VT3) oder die Zeitdauerschwelle (TT1) nach einer Verzögerung auf ihren Anfangswert zurückgeführt wird.

14. Verfahren nach Anspruch 13, **dadurch gekennzeichnet, dass** die Zurückführung der dritten Spannungsschwelle (VT3) oder der Zeitdauerschwelle (TT1) auf ihren Anfangswert durch den Umstand bedingt ist, dass während dieser Periode das Öffnen des gesteuerten Schalters (TR) nicht durch das Überschreiten der dritten Spannungsschwelle (VT3) durch die gleichgerichtete Wechselspannung (V1) oder durch ein Überschreiten der Zeitdauerschwelle (TT1) durch die Dauer (TM) der Leitung des gesteuerten Schalters (TR) ausgelöst worden ist.

15. Verfahren nach Anspruch 13 oder 14, **dadurch gekennzeichnet, dass** die Dauer der Verzögerung 3 s beträgt.

16. Installation zur Betätigung einer Tür (GD) eines Gebäudes oder eines Tors, welche durch eine Wechselspannung gespeist wird, mit einem Wechselspannungs-Gleichspannungs-Umformer und mit einem Gleichstrommotor (MOT), der mechanisch mit der Tür oder dem Tor verbunden ist, wobei der Umformer einen Gleichrichter (REC) und einen zwischen die Eingangsklemmen des Motors geschalteten Kondensator (CM) aufweist, welcher durch die gleichgerichtete wechselspannung (V1) über einen Schalter (TR) geladen wird, der von einer Steuerschaltung (3) mit der Frequenz der gleichgerichteten Wechselspannung gesteuert wird, **dadurch gekennzeichnet, dass** die Steuerschaltung (3) mit einer Steuereinheit (UC) ausgerüstet ist, welche die Durchführung des Steuerverfahrens nach einem der Ansprüche 1 bis 15 erlaubt.
